(19) Europäisches Patentamt
European Patent Office
Office européen des brevets

(11) EP 0 923 610 B1

(12) **EUROPÄISCHE PATENTSCHRIFT**

(45) Veröffentlichungstag und Bekanntmachung des Hinweises auf die Patenterteilung:
**10.05.2000 Patentblatt 2000/19**

(21) Anmeldenummer: **97912098.7**

(22) Anmeldetag: **02.10.1997**

(51) Int Cl.$^7$: **C08F 8/28**

(86) Internationale Anmeldenummer:
**PCT/EP97/05423**

(87) Internationale Veröffentlichungsnummer:
**WO 98/15582 (16.04.1998 Gazette 1998/15)**

(54) **MODIFIZIERTE POLYVINYLACETALE MIT NIEDERER LÖSUNGSVISKOSITÄT**
MODIFIED POLYVINYLACETALS WITH LOW SOLUTION VISCOSITY
POLYVINYLACETALS MODIFIES DE FAIBLE VISCOSITE EN SOLUTION

(84) Benannte Vertragsstaaten:
**AT BE CH DE DK ES FI FR GB IT LI NL PT SE**

(30) Priorität: **04.10.1996 DE 19641064**

(43) Veröffentlichungstag der Anmeldung:
**23.06.1999 Patentblatt 1999/25**

(73) Patentinhaber: **Wacker-Chemie GmbH**
**81737 München (DE)**

(72) Erfinder:
- **TSCHIRNER, Peter**
  **D-84547 Emmerting (DE)**
- **HEILING, Peter**
  **D-84489 Burghausen (DE)**
- **HUBER, Otto-Sebastian**
  **D-84489 Burghausen (DE)**
- **BRAUNSPERGER, Günter**
  **D-84375 Kirchdorf (DE)**
- **HAEFENER, Klaus**
  **D-84533 Marktl (DE)**
- **FRIEDL, Georg**
  **D-84489 Burghausen (DE)**

(74) Vertreter: **Schuderer, Michael, Dr. et al**
**Wacker-Chemie GmbH**
**Zentralabteilung Patente**
**Marken und Lizenzen**
**Hanns-Seidel-Platz 4**
**81737 München (DE)**

(56) Entgegenhaltungen:

| | |
|---|---|
| **EP-A- 0 505 939** | **BE-A- 675 902** |
| **GB-A- 396 186** | **GB-A- 1 094 087** |
| **GB-A- 1 174 097** | **US-A- 2 397 548** |
| **US-A- 2 469 288** | **US-A- 2 751 372** |
| **US-A- 3 349 068** | **US-A- 5 019 609** |

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 923 610 B1

## Beschreibung

Die Erfindung betrifft modifizierte Polyvinylacetale, Verfahren zu deren Herstellung sowie deren Verwendung.

Die Herstellung von Polyvinylacetalen, aus den entsprechenden Polyvinylalkoholen durch polymeranaloge Umsetzung mit den entsprechenden Aldehyden, ist bereits seit 1924 bekannt, wobei in der Folgezeit eine Vielzahl von Aldehyden zur Herstellung der entsprechenden Polyvinylacetale eingesetzt worden sind. Polyvinylacetale werden in einem 3-Stufenprozeß (Polyvinylacetat → Polyvinylalkohol → Polyvinylacetal) hergestellt, wobei Produkte resultieren, welche neben Vinylacetalgruppen noch Vinylalkohol- und Vinylacetat-Einheiten enthalten. Im folgenden werden unter modifizierten Polyvinylacetalen solche verstanden, welche neben den genannten drei Einheiten, weitere Einheiten enthalten. Kommerzielle Bedeutung haben vor allem Polyvinylformal, Polyvinylacetal und Polyvinylbutyral erlangt.

Der größte Anwendungsbereich für Polyvinylacetale ist die Herstellung von Sicherheitsgläsern im Automobilbau und in der Architektur, wobei weichgemachte Polyvinylbutyral-Folien als Zwischenschicht in Glasscheiben eingesetzt werden. Für diesen Einsatzzweck werden auch modifizierte Poylvinylbutyrale vorgeschlagen, beispielsweise die in der EP-A 368832 beschriebenen Sulfonatgruppen-haltigen Polyvinylbutyrale.

Mit Aminogruppen modifizierte Polyvinylbutyrale sind aus der EP-A 461399 bekannt. Diese werden als Fällungsmittel eingesetzt.

Ein weiteres Einsatzgebiet für Polyvinylbutyrale ist die Verwendung in korrosionsschützenden Beschichtungen. In der EP-A 505939 (US-A 5236999) wird vorgeschlagen hierzu modifizierte Polyvinylbutyrale einzusetzen, welche aufgrund der von ketogruppenhaltigen Aldehyden abgeleiteten Acetalfunktionen vernetzbar sind.

Unter anderem aufgrund ihrer guten Pigment-Bindekraft werden Polyvinylbutyrale auch als Bindemittel in Lacken und speziell in Druckfarben eingesetzt. In dieser Anwendung wird die Anforderung gestellt, daß die organischen Lösungen der Polyvinylbutyrale möglichst niedere Lösungsviskosität aufweisen sollen, um damit Farben mit hohem Feststoffgehalt bei möglichst hohem Bindemittelanteil herstellen zu können.

Die Lösungsviskosität von Polyvinylbutyral wird im Stand der Technik über das Molekulargewicht reguliert, indem zur Herstellung des Polyvinylbutyrals Polyvinylacetate mit niederem Molekulargewicht bzw. Polymerisationsgrad als Edukte eingesetzt werden. Die Verwendung von niedermolekularen Polyvinylbutyralen als Trägermaterial in Pigmentpräparationen für Druckfarben ist beispielsweise in der DE-B 2643076 (US-A 4130539) beschrieben. Nachteilig ist dabei, daß bei der Herstellung von niedermolekularen Polyvinylbutyralen durch Acetalisierung von niedermolekularen Polyvinylalkoholen erhebliche Probleme auftreten, da Lösungen von niedermolekularen, vollverseiften Polyvinylalkoholen unter anderem zum Gelieren neigen, und daher bei Temperaturen von mindestens 50°C gehandhabt werden müssen.

Es bestand daher die Aufgabe, Polyvinylacetale zur Verfügung zu stellen, welche bei vergleichbarem Vinylalkohol-Gehalt im Polyvinylacetal, im allgemeinen 10 bis 28 Gew%, und vergleichbarem Molekulargewicht der als Edukte eingesetzten Polyvinylalkohole, eine niedrigere Lösungsviskosität und höhere Lagerstabilität aufweisen, als die bisher bekannten Polyvinylacetale.

Überraschenderweise wurde gefunden, daß Polyvinylacetale, welche durch Verseifung und Acetalisierung von Vinylacetat- und 1-Alkylvinylacetat-Einheiten enthaltenden Copolymeren hergestellt werden, eine deutlich niedrigere Lösungsviskosität beispielsweise in Ethanol ergeben, als Polyvinylacetale, hergestellt durch Acetalisierung von verseiftem Polyvinylacetat mit vergleichbarem Vinylalkohol-Gehalt und Molekulargewicht.

Außerdem sind wäßrige Lösungen derartiger copolymerer Polyvinylalkohole bei Raumtemperatur unbegrenzt lagerfähig.

Gegenstand der Erfindung sind modifizierte Polyvinylacetale, erhältlich durch Verseifung von 1-Alkylvinylacetat-Vinylacetat-Copolymeren, welche 1-Alkylvinylacetat/Vinylacetat in einem Gewichtsverhältnis von 1/99 bis 40/60 enthalten, und anschließender Acetalisierung der mindestens 80 Gew% Vinylalkohol- und 1-Alkyl-Vinylalkohol-Einheiten aufweisenden Verseifungsprodukte mit einem oder mehreren aliphatischen Aldehyden mit 1 bis 6 C-Atomen unter Säurekatalyse in wäßrigem und/oder organischem Milieu.

Geeignete aliphatische Aldehyde mit 1 bis 6 C-Atomen sind beispielsweise Formaldehyd, Acetaldehyd, Propionaldehyd und vorzugsweise Butyraldehyd.

Als Alkylgruppen geeignet sind $C_1$- bis $C_4$-Reste wie Methyl-, Ethyl-, n-Propyl-Rest; bevorzugt wird die Methylgruppe.

Die modifizierten Polyvinylacetale enthalten

a) 50 - 89.5 Gew% Vinylacetal-Einheiten

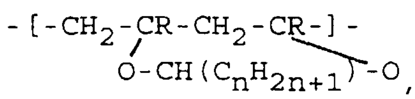

b) 10 - 30 Gew % Vinylalkohol-Einheiten -[-$CH_2$-CR(OH)-]-,
c) 0.5 - 20 Gew% Vinylacetat-Einheiten-[-$CH_2$-CR($OCOCH_3$)-]-, wobei R die Bedeutung H oder $C_1$- bis $C_4$-Alkylrest hat und n gleich 0 bis 5 ist, und die Vinylalkohol-Einheiten b) und die Vinylacetat-Einheiten c) 1-Alkylvinylalkohol/Vinylalkohol und 1-Alkylvinylacetat/Vinylacetat in einem Gewichtsverhältnis von jeweils 1/99 bis 40/60 enthalten.

Die am meisten bevorzugten Polyvinylacetale enthalten 55 bis 89 Gew% vinylacetal-Einheiten a), 10 bis 25 Gew% Vinylalkohol-Einheiten b) und 1 bis 20 Gew% Vinylacetat-Einheiten c). Das Gewichtsverhältnis 1-Alkylvinylalkohol/Vinylalkohol und 1-Alkylvinylacetat/Vinylacetat beträgt vorzugsweise jeweils von 10/90 bis 20/80. Bevorzugte Vinylacetal-Einheiten sind Vinylformal (n=0), Vinylacetal (n=1), Vinylpropional (n=2) und am meisten bevorzugt Vinylbutyral (n=3).

Gegebenenfalls können die Polyvinylacetale noch 1 bis 5 Gew% weitere Monomereinheiten enthalten. Beispiele hierfür sind carboxylfunktionelle Comonomere wie Acrylsäure, Methacrylsäure, Crotonsäure und amidfunktionelle Comonomereinheiten wie Acrylamid, Methacrylamid.

Die Viskosität der modifizierten Polyvinylacetale (DIN 53015; Methode nach Höppler, 10 %-ige Lösung in Ethanol) beträgt 6 bis 600 mPas, vorzugsweise 6 bis 14 mPas.

Ein weiterer Gegenstand der Erfindung ist ein Verfahren zur Herstellung von modifizierten Polyvinylacetalen durch Verseifung von 1-Alkylvinylacetat-Vinylacetat-Copolymeren, welche 1-Alkylvinylacetat/Vinylacetat in einem Gewichtsverhältnis von 1/99 bis 40/60 enthalten, und anschließender Acetalisierung der mindestens 80 Gew% Vinylalkohol und 1-Alkyl-Vinylalkohol-Einheiten aufweisenden Verseifungsprodukte mit einem oder mehreren aliphatischen Aldehyden mit 1 bis 6 C-Atomen unter Säurekatalyse in wäßrigem und/oder organischem Milieu.

Zur Herstellung der Alkyl-modifizierten Polyvinylacetale werden teil- oder vollverseifte Vinylacetat-Copolymere, welche mindestens 80 Gew% (1-Alkyl-)Vinylalkohol-Einheiten aufweisen, eingesetzt. Als vollverseift bezeichnet man dabei solche Polymerisate deren (1-Alkyl-)Vinylalkohol-Gehalt 98 bis 100 Gew% beträgt. Geeignete 1-Alkylvinylacetate sind solche mit gesättigten $C_1$- bis $C_4$-Alkylresten. Bevorzugt werden teil- oder vollverseifte Copolymere von 1-Methylvinylacetat (Isopropenylacetat) und Vinylacetat. Teil- oder vollverseifte Copolymere aus 1-Alkylvinylacetat und Vinylacetat sind beispielsweise aus der DE-A 3932027 (Derwent-Abstract AN 91-095470) als Textilklebemittel bekannt.

Zur Herstellung der teil- oder vollverseiften Vinylacetat-Copolymere werden Vinylacetat und 1-Alkylvinylacetat im genannten Gewichtsverhältnis 1-Alkylvinylacetat/Vinylacetat von 1/99 bis 40/60, vorzugsweise 10/90 bis 20/80 copolymerisiert. Gegebenenfalls können noch 1 bis 5 Gew%, bezogen auf das Gesamtgewicht der Comonomere, weitere Monomere wie carboxylgruppen- oder amidgruppenhaltige Comonomere copolymerisiert werden.

Die Polymerisation erfolgt in bekannter Weise, vorzugsweise durch Substanzpolymerisation oder durch Polymerisation in organischen Lösungsmitteln, besonders bevorzugt in alkoholischer Lösung. Geeignete Lösungsmittel und Regler sind beispielsweise Methanol, Ethanol, Propanol, Isopropanol. Die Polymerisation wird unter Rückfluß bei einer Temperatur von 60 bis 100°C durchgeführt und durch Zugabe gängiger Initiatoren radikalisch initiiert. Beispiele für gängige Initiatoren sind Percarbonate wie Cyclohexylperoxidicarbonat. Die Einstellung des Molekulargewichts kann in bekannter Weise durch Zugabe von Regler, durch den Lösungsmittelgehalt, durch Variation der Initiatorkonzentration und durch Variation der Temperatur erfolgen. Vorzugsweise wird ein Molekulargewicht (Gewichtsmittel $M_w$) von 5000 bis 100000 eingestellt. Nach Abschluß der Polymerisation wird das Lösungsmittel sowie gegebenenfalls überschüssiges Monomer und Regler abdestilliert.

Die Verseifung der (1-Alkyl-)Vinylacetat-Einheiten erfolgt in an sich bekannter Weise, zum Beispiel nach dem Band- oder Kneterverfahren, im Alkalischen oder Sauren unter Zugabe von Säure oder Base. Vorzugsweise wird das 1-Alkylvinylacetat-Vinylacetat-Copolymer in Alkohol, beispielweise Methanol, unter Einstellen eines Feststoffgehalts von 30 bis 70 % aufgenommen. Bevorzugt wird die Hydrolyse im Basischen durchgeführt, beispielsweise durch Zugabe von NaOH, KOH oder $NaOCH_3$. Die Base wird im allgemeinen in einer Menge von 1 bis 5 Mol% pro Mol Acetateinheiten eingesetzt. Die Hydrolyse wird bei Temperaturen von 30°C bis 60°C durchgeführt. Nach Abschluß der Hydrolyse wird das Lösungsmittel abdestilliert.

Die teil- oder vollverseiften 1-Alkylvinylacetat-Vinylacetat-Copolymere haben einen Rest-(1-Alkyl-)Vinylacetat-Gehalt von 0.5 bis 20 Gew%, vorzugsweise 1 bis 5 Gew%, jeweils bezogen auf das Gesamtgewicht des Copolymers. Bevorzugt werden teil- oder vollverseifte 1-Methylvinylacetat-Vinylacetat-Copolymere. Die Viskosität (DIN 53015, Methode nach Höppler; 4 %-ige Lösung in Wasser) beträgt 1 bis 30 mPas, vorzugsweise 1 bis 2.5 mPas, und dient als Maß für das Molekulargewicht bzw. für den Polymerisationsgrad der teil- oder vollverseiften 1-Alkylvinylacetat-Vinylacetat-Copolymere.

Zur Acetalisierung werden die teil- oder vollverseiften 1-Alkylvinylacetat-Vinylacetat-Copolymere vorzugsweise in wäßrigem Medium aufgenommen. Üblicherweise wird ein Festgehalt der wäßrigen Lösung von 5 bis 30 % eingestellt. Die Acetalisierung erfolgt in Gegenwart von sauren Katalysatoren wie Salzsäure, Schwefelsäure oder Phosphorsäure. Vorzugsweise wird durch Zugabe von 20 %-iger Salzsäure der pH-Wert der Lösung auf Werte < 1 eingestellt.

Nach Zugabe des Katalysators wird die Lösung auf vorzugsweise -10°C bis +30°C abgekühlt und die Acetalisierungsreaktion durch Zugabe des Aldehyds gestartet.Bevorzugte Aldehyde aus der Gruppe der aliphatischen Aldehyde mit 1 bis 6 C-Atomen sind Formaldehyd, Acetaldehyd, Propionaldehyd und am meisten bevorzugt Butyraldehyd. Die Zugabemenge richtet sich dabei nach dem erwünschten Acetalisierungsgrad. Da die Acetalisierung mit fast vollständigem Umsatz abläuft kann die Zugabemenge durch einfache stöchiometrische Rechnung bestimmt werden. Die Acetalisierung wird nach Abschluß der Zugabe des Aldehyds durch Erwärmen des Ansatzes auf 20°C bis 60°C und mehrstündiges Rühren, vorzugsweise 1 bis 6 Stunden vervollständigt, und das pulverförmige Reaktionsprodukt durch Filtration isoliert.

Mit der erfindungsgemäßen Verfahrensweise werden Polyvinylacetale zugänglich, welche bei gleichem Molekulargewicht und gleicher OH-Zahl der als Edukte eingesetzten Polyvinylalkohole, gegenüber den bisher bekannten Polyvinylacetalen eine deutlich reduzierte Lösungsviskosität zeigen. Gemäß Stand der Technik resultieren beispielsweise bei der Acetalisierung von Polyvinylalkoholen, mit einer Viskosität (DIN 53015; Methode nach Höppler; 4 %-ige wäßrige Lösung) von 2 bis 30 mPas, Polyvinylbutyrale mit einer Viskosität (DIN 53015; Methode nach Höppler; 10 %-ige ethanolische Lösung) von 15 bis 1200 mPas. Bei der erfindungsgemäßen Vorgehensweise erhält man dagegen bei der Acetalisierung von 1-Methylvinylalkohol-Vinylalkohol-Copolymeren, mit der gleichen Viskosität (DIN 53015; Methode nach Höppler; 4 %-ige wäßrige Lösung) von 2 bis 30 mPas mit Butyraldehyd, Polyvinylbutyrale mit deutlich reduzierter Lösungsviskosität (DIN 53015; Methode nach Höppler; 10 %-ige ethanolische Lösung) von 6 bis 600 mPas. Mit den erfindungsgemäßen alkylmodifizierten Polyvinylbutyralen wird damit erstmals Polyvinylbutyral zugänglich gemacht, dessen Lösungsviskosität (DIN 53015; Methode nach Höppler; 10 Gew% in Ethanol) < 10 mPas beträgt.

Wie eingangs erwähnt, besteht vor allem in der Druckfarbenindustrie Bedarf an Bindemitteln mit möglichst niederer Lösungsviskosität, um damit Druckfarben zur Verfügung stellen zu können, welche hohe Feststoffgehalte bei gleichem oder höherem Bindemittelgehalt ermöglichen. Aufgrund der niederen Eigenviskosität von Lösungen der erfindungsgemäßen modifizierten Polyvinylacetale, insbesondere Polyvinylbutyrale, und der hohen Lagerstabilität damit hergestellter Druckfarben-Formulierungen eignen sich diese insbesonders zur Verwendung in Druckfarbenzusammensetzungen.

Bei Verwendung der erfindungsgemäßen modifizierten Polyvinylacetale in Druckfarben kann bei unveränderter Viskosität der Druckfarbenformulierung ein höherer Bindemittelanteil als bei Verwendung eines Polyvinylacetals gemäß Stand der Technik eingesetzt werden. Dies führt zu Druckfarben mit höherem Glanz, aufgrund des höheren Bindemittelanteils. Überraschenderweise wurde auch, wie Tabelle 2 zeigt, festgestellt, daß mit den modifizierten Polyvinylacetalen auch die Lagerstabilität (Viskositätskonstanz) von Druckfarbenformulierungen verbessert werden kann.

Geeignete Druckfarbenformulierungen sind dem Fachmann bekannt und enthalten im allgemeinen 5 bis 20 Gew% Pigmentanteil, beispielsweise Diazo- oder Phthalocyanin-Pigmente, 5 bis 15 % Polyvinylacetal-Bindemittel und Lösungsmittel, beispielsweise Alkohole wie Ethanol oder Ester wie Ethylacetat. Gegebenenfalls können noch weitere Zusatzstoffe wie Haftvermittler, Verzögerer, Weichmacher und andere Additive, wie beispielsweise Füllstoffe oder Wachse, enthalten sein.

Weitere Einsatzgebiete der erfindungsgemäß modifizierten Polyvinylacetale sind die als Bindemittel in Korrosionsschutzmitteln, wobei als Vorteile die bessere Löslichkeit in aromatischen Lösungsmitteln und die geringere Emission von flüchtigen organischen Verbindungen (VOC-Emission), wegen des geringeren Binderbedarfs, zu nennen sind. Weiter sind die modifizierten Polyvinylacetale auch als Bindemittel in der Keramikindustrie, speziell als Binder für keramische Grünkörper, geeignet. Zu nennen ist auch der Einsatz als Bindemittel für Keramikpulver und Metallpulver im Spritzguß (powder injection molding) und als Bindemittel für die Innenbeschichtung von Dosen, gegebenenfalls in Kombination mit Vernetzern wie Epoxidharzen.

Die nachfolgenden Beispiele dienen zur weiteren Erläuterung der Erfindung:

Beispiel 1:

In einem 120-l Reaktor, mit Rückflußkühler, Dosiereinrichtungen und einem Ankerrührer, wurden 20 kg eines Copolymeren aus Vinylacetat und Isopropenylacetat (80/20) mit einem K- Wert nach Fikentscher von 27, in 60 kg Methanol bei 60°C gelöst. Nachdem alles gelöst war, wurden 800 ml einer 45 %-igen methanolischen NaOH Lösung dosiert. Nach 2 Stunden wurde mit konz. Essigsäure auf einen pH von ca. 7 eingestellt und das ausgefallene Produkt abgesaugt, mit Methanol gewaschen und getrocknet. Analysen des erhaltenen Produktes: Feststoffgehalt 98,7 %; Restacetatgehalt 2 %; Viskosität einer 4 %-igen wäßrigen Lösung nach Höppler (DIN 53015): 2.3 mPas

In einem 6 Liter Glasreaktor werden 2715 ml dest. Wasser, 1114 ml 20%ige HCl und 1172 ml einer 20 %-igen wäßrigen Lösung des vollverseiften 1-Methylvinylacetat-Vinylacetat-Copolymers vorgelegt. Die Vorlage wurde innerhalb von 30 Minuten auf -4°C abgekühlt und dann in einem Zeitraum von 3 Minuten 182 ml n-Butyraldehyd, vorgekühlt auf -4°C, zugegeben. Die Reaktorinnentemperatur stieg dabei auf 0°C an. Es wurde innerhalb weniger Minuten wieder auf -4°C abgekühlt. Der zunächst klare Ansatz wurde sofort nach der Aldehydzugabe milchig trüb, und bereits nach 5 bis 7 Minuten fiel das Produkt aus. Nach einer Stunde Reaktionszeit wurde die Temperatur über einen Zeitraum von 3 Stunden auf 22°C erhöht und diese Temperatur für weitere 2 Stunden gehalten. Daraufhin wurde das Produkt abgesaugt und solange mit destilliertem Wasser gewaschen, bis das Filtrat neutral reagierte. Anschließend erfolgte die Trocknung bis zu einem Festgehalt von mindestens 98 %, zunächst bei 22°C, dann bei 40°C im Vakuum.
Es wurde ein modifiziertes Polyvinylbutyral mit 16.7 Gew% 1-Methylvinylalkohol/Vinylalkohol-Einheiten, 2.0 Gew% 1-Methylvinylacetat/Vinylacetat-Einheiten und 81.3 Gew% (Methyl-)Vinylbutyral-Einheiten erhalten. Die Viskosität (DIN 53015; Methode nach Höppler; 10 %-ige ethanolische Lösung) betrug 8.22 mPas.

Vergleichsbeispiel 1:

Es wurde analog Beispiel 1 vorgegangen mit dem Unterschied, daß zur Acetalisierung als Polyvinylalkohol eine 20 %-ige wäßrige Lösung eines vollverseiften Vinylacetat-Homopolymers mit einem Restgehalt an Vinylacetat-Einheiten von 2 Gew% und einer Viskosität (DIN 53015; Methode nach Höppler; 4 %-ige wäßrige Lösung) von 2.1 mPas vorgelegt wurde.
Es wurde ein Polyvinylbutyral mit 19.4 Gew% Vinylalkohol-Einheiten, 2.0 Gew% Vinylacetat-Einheiten und 78.6 Gew% Vinylbutyral-Einheiten erhalten. Die Viskosität (DIN 53015; Methode nach Höppler; 10 %-ige ethanolische Lösung) betrug 14.24 mPas.

Beispiel 2:

Es wurde analog Beispiel 1 vorgegangen mit dem Unterschied, daß zur Acetalisierung 2173 ml destilliertes Wasser, 855 ml 20 %-ige HCl und 1250 ml einer 20 %-igen wäßrigen Lösung eines vollverseiften 1-Methylvinylacetat-Vinylacetat-Copolymers mit einem 1-Methylvinylacetat-Gehalt von 10 Gew% vorgelegt wurde. Das vollverseifte Copolymer hatte einen Restgehalt an 1-Methyl vinylacetat- bzw. Vinylacetat-Einheiten von 2 Gew%; eine Viskosität (DIN 53015; Methode nach Höppler; 4 %-ige wäßrige Lösung) von 5.5 mPas. Die Vorlage wurde innerhalb von 30 Minuten auf 0°C abgekühlt. Die weitere Vorgehensweise entsprach der von Beispiel 1.
Es wurde ein Polyvinylbutyral mit 17.4 Gew% 1-Methylvinylalkohol/Vinylalkohol-Einheiten, 2.0 Gew% 1-Methylvinylacetat/Vinylacetat-Einheiten und 80.6 Gew% (Methyl-)Vinylbutyral-Einheiten erhalten. Die Viskosität (DIN 53015; Methode nach Höppler; 10 %-ige ethanolische Lösung) betrug 62.6 mPas.

Vergleichsbeispiel 2:

Es wurde analog Beispiel 2 vorgegangen mit dem Unterschied, daß als Polyvinylalkohol eine 20 %-ige wäßrige Lösung eines vollverseiften Vinylacetat-Homopolymers mit einem Restgehalt an Vinylacetat-Einheiten von 2 Gew% und einer Viskosität (DIN 53015; Methode nach Höppler; 4 %-ige wäßrige Lösung) von 5.6 mPas vorgelegt wurde.
Es wurde ein Polyvinylbutyral mit 17.6 Gew% Vinylalkohol-Einheiten, 2.0 Gew% Vinylacetat-Einheiten und 80.4 Gew% Vinylbutyral-Einheiten erhalten. Die Viskosität (DIN 53015; Methode nach Höppler; 10 %-ige ethanolische Lösung) betrug 116 mPas.

Vergleichsbeispiel 3:

Es wurde analog Beispiel 1 vorgegangen mit dem Unterschied, daß als Polyvinylalkohol eine 20 %-ige wäßrige Lösung eines vollverseiften Vinylacetat-Homopolymers mit einer Viskosität (DIN 53015; Methode nach Höppler; 4 %-ige wäßrige Lösung) von 2.5 mPas vorgelegt wurde.
Es wurde ein Polyvinylbutyral mit 18.4 Gew% Vinylalkohol-Einheiten, 2.0 Gew% Vinylacetat-Einheiten und 79.6 Gew% Vinylbutyral-Einheiten erhalten. Die Viskosität (DIN 53015; Methode nach Höppler; 10 %-ige ethanolische Lösung) betrug 18.9 mPas.

Beispiel 3:

Es wurde analog Beispiel 1 vorgegangen mit dem Unterschied, daß zur Acetalisierung 237 ml Acetaldehyd eingesetzt wurden. Die Fälltemperatur betrug 10°C. Nach zwei Stunden wurde für eine Stunde auf 35°C aufgeheizt. Danach auf 20°C abgekühlt, abgesaugt und neutral gewaschen.
Es wurde ein Polyvinylacetal mit 10.9 Gew% 1-Methylvinylalkohol/Vinylalkohol-Einheiten, 2.0 Gew% 1-Methylvinylacetat/Vinylacetat-Einheiten und 87.1 Gew% Vinylacetal-Einheiten erhalten. Die Viskosität (DIN 53015; Methode nach Höppler; 10 %-ige ethanolische Lösung) betrug 12 mPas.

Vergleichsbeispiel 4:

Es wurde analog Beispiel 3 vorgegangen, wobei ein vollverseiftes Vinylacetat-Homopolymer mit einer Viskosität (DIN 53015; Methode nach Höppler; 4 %-ige wäßrige Lösung) von 2.5 mPas vorgelegt wurde.
Es wurde ein Polyvinylacetal mit 11.2 Gew% Vinylalkohol-Einheiten, 2.0 Gew% Vinylacetat-Einheiten und 86.8 Gew% Vinylacetal-Einheiten erhalten. Die Viskosität (DIN 53015; Methode nach Höppler; 10 %-ige ethanolische Lösung) betrug 22.6 mPas.

Beispiel 4:

Es wurde analog Beispiel 1 vorgegangen mit dem Unterschied, daß zur Acetalisierung 159 ml Propionaldehyd eingesetzt wurden. Die Fälltemperatur betrug -6°C. Nach zwei Stunden wurde auf 22°C aufgeheizt. Danach abgesaugt und neutral gewaschen. Es wurde ein Polyvinylpropional mit 18 Gew% 1-Methylvinylalkohol/Vinylalkohol-Einheiten, 2.0 Gew% 1-Methylvinylacetat/Vinylacetat-Einheiten und 80 Gew% Vinylpropional-Einheiten erhalten. Die Viskosität (DIN 53015; Methode nach Höppler; 10 %-ige ethanolische Lösung) betrug 10 mPas.

Vergleichsbeispiel 5:

Es wurde analog Beispiel 4 vorgegangen, wobei ein vollverseiftes Vinylacetat-Homopolymer mit einer Viskosität (DIN 53015; Methode nach Höppler; 4 %-ige wäßrige Lösung) von 2.5 mPas eingesetzt wurde.
Es wurde ein Polyvinylpropional mit 19.3 Gew% Vinylalkohol-Einheiten, 2.0 Gew% Vinylacetat-Einheiten und 78.7 Gew% Vinylpropional-Einheiten erhalten. Die Viskosität (DIN 53015; Methode nach Höppler; 10 %-ige ethanolische Lösung) betrug 15.9 mPas.

Beispiel 5:

Es wurde analog Beispiel 1 vorgegangen, mit dem Unterschied, daß ein copolymerer Polyvinylalkohol, hergestellt durch vollständige Verseifung eines Copolymeren aus 1-Methylvinylacetat und Vinylacetat im Verhältnis 10/90 eingesetzt wurde.

Beispiel 6:

Es wurde analog Beispiel 1 vorgegangen, mit dem Unterschied, daß ein copolymerer Polyvinylalkohol, hergestellt durch vollständige Verseifung eines Copolymeren aus 1-Methylvinylacetat und Vinylacetat im Verhältnis 30/70 eingesetzt wurde.

Beispiele 7 bis 12:

Es wurde analog Beispiel 1 vorgegangen, wobei unterschiedliche Mengen von Butyraldehyd zur Acetalisierung eingesetzt wurden:

| Beispiel | 7 | 8 | 9 | 10 | 11 | 12 |
|---|---|---|---|---|---|---|
| Butyraldehydmenge [ml] | 200 | 190 | 180 | 170 | 160 | 150 |

Die Charakterisierung der Edukte und Produkte der Beispiele 1 bis 12 und der Vergleichsbeispiele 1 bis 5 ist in Tabelle 3 zusammengefaßt.

Bestimmungsmethoden:

1. Bestimmung der dynamischen Viskosität einer Lösung von Polyvinylacetalen (Lösungsviskosität) :

90.00 ± 0.01 g Ethanol und 10.00 ± 0.01 g Polyvinylacetal wurden in einem 250 ml Erlenmeyerkolben mit Schliffstopfen eingewogen und bei 50°C in der Schüttelmaschine vollständig aufgelöst. Anschließend wurde auf 20°C abgekühlt und die dynamische Viskosität (DIN 53 015; Methode nach Höppler) bei 20°C mit der Kugel 3 bestimmt.

2. Bestimmung des Vinylalkohol-Gehalts:

Der Gehalt an 1-Methyvinylalkohol- und Vinylalkohol-Gruppen in den Polyvinylacetalen wurde durch die Acetylierung der Hydroxylgruppen mit Essigsäureanhydrid in Gegenwart von Pyridin und 4-Dimethylaminopyridin ermittelt. Dazu wurden 1 g ± 0.001 g Polyvinylbutyral in 24 ml Pyridin und 0.04 g 4-Dimethylaminopyridin bei 50°C innerhalb

von 2 Stunden gelöst. Die auf 25°C abgekühlte Lösung wurde mit 10 ml einer Mischung aus Pyridin und Essigsäureanhydrid (87/13 Volumenteile) versetzt und 1 Stunde intensiv durchmischt. Daraufhin wurden 30 ml einer Mischung aus Pyridin/ Wasser (5/1 Volumenteile) zugesetzt und eine weitere Stunde geschüttelt. Anschließend wurde mit methanolischer 0.5 N KOH auf pH 7 titriert.

Berechnung :

$$\text{Gew\% (1-Methyl-)Vinylalkohol} = [(100 \times M_w)/2000] \times$$

$$(\text{ml Blindwert - ml Probe}).$$

Mit Mw = Mittleres Molekulargewicht pro Repetiereinheit des Polymeren.

3. Bestimmung der Viskosität der Polyvinylalkohol-Lösungen:

Die Bestimmung der Viskosität der als Edukte eingesetzten vollverseiften Vinylacetat- bzw. 1-Methylvinylacetat/Vinylacetat-Polymere erfolgte analog zur Bestimmung der dynamischen Viskosität der Polyvinylacetale; es wurden nur 4 %-ige wäßrige Lösungen eingesetzt.

4. Bestimmung der Viskosität über die Auslaufzeit:

Die Messungen wurden nach DIN 53211-4 mit einem 4 mm Becher durchgeführt.
Ergebnisse der Messungen der Lösungsviskosität der Produkte aus den Beispielen bzw. Vergleichsbeispielen:

Lösungsviskosität:

Die Lösungsviskosität des Polyvinylbutyrals aus Vergleichsbeispiel 1 betrug in 10 %-iger ethanolischer Lösung 14.24 mPas. In einer Lösung des erfindungsgemäßen Polyvinylbutyrals aus Beispiel 1 reduzierte sich, trotz vergleichbarem Molekulargewicht des eingesetzten Polyvinylalkohols, die Lösungsviskosität drastisch auf 8.22 mPas. Die Lösungsviskosität des Polyvinylbutyrals aus Vergleichsbeispiel 2 in 10 %-iger ethanolischer Lösung betrug 116 mPas. Die Lösungsviskosität in einer Lösung des Polyvinylbutyrals aus Beispiel 2 reduzierte sich, trotz gleichem Molekulargewicht und gleichem OH-Gehalt des eingesetzten Polyvinylalkohols, drastisch auf nur mehr 62.6 mPas.

Abhängigkeit der Viskosität vom Festgehalt:

Von den Polyvinylbutyralen aus Beispiel 1 und Vergleichsbeispiel 1 wurden jeweils Lösungen in Ethylacetat mit Festgehalten von 20 Gew%, 25 Gew%, 30 Gew%, 35 Gew% und 40 Gew% hergestellt wurden, und die Abhängigkeit der Viskosität vom Festgehalt nach DIN 53211-4 ermittelt. Es wurden folgende Ergebnisse erhalten:

| Festgehalt (%) | 20 | 25 | 30 | 35 | 40 |
|---|---|---|---|---|---|
| Auslaufzeit Bsp.1 (s) | 15 | 19 | 29 | 67 | 85 |
| Auslaufzeit V.bsp.1 (s) | 30 | 71 | 199 | * | * |

* = Viskosität nicht mehr meßbar.

Mit den erfindungsgemäßen modifizierten Polyvinylbutyralen erhält man vor allem bei hohen Festgehalten deutlich niederviskosere Lösungen als mit herkömmlichen Polyvinylbutyralen gleicher OH-Zahl und gleichen Molekulargewichts.

Anwendungstechnische Prüfung in Druckfarben-Rezepturen:

Das modifizierte Polyvinylbutyral aus Beispiel 1 wurde auf dessen Eignung als Bindemittel in Druckfarben-Rezepturen geprüft (Polyvinylbutyral mit 15.8 Gew% 1-Methylvinylalkohol/Vinylalkohol-Einheiten, 2.0 Gew% 1-Methylvinylacetat/Vinylacetat-Einheiten, 82.2 Gew% (Methyl-)Vinylbutyral-Einheiten, und einer Lösungsviskosität in 10 %-iger ethanolischer Lösung von 8.22 mPas).

Als Vergleich wurde ein handelsübliches Polyvinybutyral (Pioloform BN 18 der Wacker-Chemie GmbH) mit folgenden Kenndaten eingesetzt:
Polyvinylbutyral mit 18 Gew% Vinylalkohol-Anteil, 2 Gew% Vinylacetat-Anteil, 80 Gew% Vinylbutyral-Anteil, einer Lösungsviskosität in 10 %-iger ethanolischer Lösung von 15.0 mPas.

Zur Bestimmung von Glanz, Transparenz und Deckfähigkeit der Drucke wurde eine Druckfarbe nach folgende Rezeptur verwendet:

| Bestandteile: | Gew% |
|---|---|
| Verzögerer (Methoxypropanol) | 9.3 |
| Lösungsmittel (Ethanol oder Ethylacetat) | 74.0 |
| Bindemittel (Polyvinylbutyral) | 9.2 |
| Pigment | 7.5 |

Als Pigmente wurden eingesetzt:

Permanentgelb P-GRL 04 (Hoechst AG) bzw. Titandioxid 2065 (Kronos).

Anwendungstechnische Prüfmethoden:

1. Bestimmung des Glanz:

Zur Glanzbestimmung wurde auf Normpapier (APCO II/II, 150 g/m$^2$) die Druckfarbe mit einem Rakel in einer Schichtdicke (naß) von 12 µm aufgetragen. Nach Trocknung (24 h bei 23°C und 50 % relative Luftfeuchte) wurde der Glanz (Reflektometerwert) nach DIN 67530 mit einem Reflektometer (Micro Tri Gloss / Byk Gardner) gemessen.

2. Bestimmung der Transparenz und der Deckkraft:

Zur Beurteilung der Transparenz und der Deckkraft wurde auf Normpapier (APCO II/II, 150 g/m$^2$) die Druckfarbe mit einem Rakel in einer Schichtdicke (naß) von 12 µm aufgetragen. Nach Trocknung (24 h bei 23°C und 50 % relative Luftfeuchte) wurde mit einem wasserverdünnbaren Klarlack (Basis Polyacrylat) in einer Schichtdicke (naß) von 12 µm überlackiert. Nach abermaliger Trocknung (24 h bei 23°C und 50 % relative Luftfeuchte) wurde die Transparenz und die Deckkraft visuell beurteilt, wobei folgendes Bewertungsschema gegenüber einem Vergleichsstandard (st) galt:
1 = gleich, 2 = etwas, 3 = merklich, 4 = deutlich, 5 = wesentlich,
de = deckender, tra = transparenter.

Die Ergebnisse der Glanzmessung, der Messung der Transparenz und der Bestimmung der Deckkraft sind in Tabelle 1 zusammengefaßt:

In der Formulierung mit Permanentgelb sind Glanz und Transparenz der Druckfarben, welche das erfindungsgemäß modifizierte Polyvinylbutyral enthalten, mit den Formulierungen mit herkömmlichem Polyvinylbutyral vergleichbar.
In den Formulierungen mit Titanoxid ergibt das erfindungsgemäße Polyvinylbutyral deutlich besseren Glanz und verbesserte Transparenz.

TABELLE 1:

| Permanentgelb P-GRL 04 in Ethylacetat: | | | |
|---|---|---|---|
| Polyvinylbutyral | Glanz 60° auf weiß | Transparenz % | Deckkraft visuell |
| Beispiel 1 | 43.5 | 96.2 | 2 de |
| Pioloform BN 18 | 43.7 | 96.7 | Standard |
| Titandioxid 2065 in Ethanol: | | | |
| Polyvinylbutyral | Glanz 60° auf schwarz | Transparenz % | Deckkraft visuell |
| Beispiel 1 | 32.8 | 84.2 | 2 tra |
| Pioloform BN 18 | 31.9 | 82.9 | Standard |

TABELLE 1: (fortgesetzt)

| Titandioxid 2065 in Ethylacetat: | | | |
|---|---|---|---|
| Polyvinylbutyral | Glanz 60° auf schwarz | Transparenz % | Deckkraft visuell |
| Beispiel 1 | 43.4 | 81.9 | 1 de |
| Pioloform BN 18 | 34.8 | 80.9 | Standard |

Die Viskosität und Lagerstabilität von Druckfarbenformulierungen wurden mit der folgenden, pigmentreicheren Rezeptur überprüft:

| Bestandteile: | Gew% |
|---|---|
| Verzögerer (Methoxypropanol) | 4.3 |
| Lösungsmittel (Ethanol oder Ethylacetat) | 73.0 |
| Bindemittel (Polyvinylbutyral) | 10.7 |
| Pigment (Permanentgelb P-GRL 04) | 12.0 |
| | 100.0 |
| Haftvermittler (Polymin $H_2O$-frei) | 3.0 |

Bestimmung der Lagerstabilität:

Die Bestimmung der Lagerstabilität erfolgte mittels Viskositätsmessung unmittelbar nach Anrühren der Druckfarbenformulierung und nach einer Lagerzeit von 7 Tagen unter Normalbedingungen (23°C, 50 % rel. Luftfeuchtigkeit). Die Viskosität wurde mittels Rotationsviskosimeter bestimmt. Die Ergebnisse sind in Tabelle 2 zusammengefaßt.

TABELLE 2:

| Polyvinylbutyral | Viskosität sofort (mPas) | Viskosität 7 Tage (mPas) |
|---|---|---|
| In Ethanol: | | |
| Bsp. 1 ohne Haftvermittler | 260 | 330 |
| Bsp. 1 mit 3 % Polymin | 319 | 404 |
| Pioloform BN 18 ohne Haftvermittler | 415 | 574 |
| Pioloform BN 18 mit 3 % Polymin | 829 | 893 |
| In Ethylacetat: | | |
| Bsp. 1 ohne Haftvermittler | 489 | 404 |
| Bsp. 1 mit 3 % Polymin | 595 | 489 |
| Pioloform BN 18 ohne Haftvermittler | 659 | 744 |
| Pioloform BN 18 mit 3 % Polymin | nicht meßbar | nicht meßbar |

Die Lagerstabilität in einer Druckfarbenformulierung mit und ohne Haftvermittler ist bei Verwendung des erfindungsgemäß modifizierten Polyvinylbutyral deutlich besser als bei einer Formulierung mit herkömmlichem Polyvinylbutyral-Bindemittel.

Tabelle 3:

| Beispiel | IPA (Gew%) | K-Wert PVOH | Viskosität PVOH (mPas) | Molekulargewicht PVOH (SEC-Methode) Mw | Mn | U | Aldehyd | VOH-Gehalt (Gew%) | Viskosität PVAC (mPas) | Molekulargewicht PVAC (SEC-Methode) Mw | Mn | U |
|---|---|---|---|---|---|---|---|---|---|---|---|---|
| Bsp. 1 | 20 | 30.2 | 2.3 | 23000 | 9300 | 2.4 | Butyr- | 16.7 | 8.2 | 23000 | 8200 | 2.8 |
| V.Bsp. 1 | 0 | 28.1 | 2.1 | 15000 | 6400 | 2.3 | Butyr- | 19.4 | 14.2 | 14300 | 5900 | 2.4 |
| V.Bsp. 3 | 0 | 31.1 | 2.5 | 26000 | 10800 | 2.4 | Butyr- | 18.4 | 18.9 | 25700 | 10000 | 2.6 |
| Bsp. 2 | 10 | 45.6 | 5.5 | 74000 | 23700 | 3.1 | Butyr- | 17.4 | 62.6 | | | |
| V.Bsp. 2 | 0 | 44.1 | 5.5 | 71000 | 23000 | 3.1 | Butyr- | 17.6 | 116.0 | | | |
| Bsp. 3 | 20 | | 2.3 | 23000 | 9300 | 2.4 | Acet- | 10.9 | 12.0 | | | |
| V.Bsp. 4 | 0 | | 2.5 | 26000 | 10800 | 2.4 | Acet- | 11.2 | 22.6 | | | |
| Bsp. 4 | 20 | | 2.3 | 23000 | 9300 | 2.4 | Propion- | 18.0 | 10.0 | | | |
| V.Bsp. 5 | 0 | | 2.5 | 26000 | 10800 | 2.4 | Propion- | 19.3 | 15.9 | | | |
| Bsp. 5 | 10 | 28.6 | 2.2 | | | | Butyr- | 16.1 | 7.7 | | | |
| Bsp. 6 | 30 | 30.0 | 2.3 | | | | Butyr- | 15.1 | 9.6 | | | |
| Bsp. 7 | 20 | | 2.3 | | | | Butyr- | 12.6 | 8.3 | | | |
| Bsp. 8 | 20 | | 2.3 | | | | Butyr- | 13.8 | 8.6 | | | |
| Bsp. 9 | 20 | | 2.3 | | | | Butyr- | 14.4 | 7.8 | | | |
| Bsp. 10 | 20 | | 2.3 | | | | Butyr- | 15.3 | 8.3 | | | |
| Bsp. 11 | 20 | | 2.3 | | | | Butyr- | 17.1 | 9.2 | | | |
| Bsp. 12 | 20 | | 2.3 | | | | Butyr- | 18.8 | 9.3 | | | |

IPA (Gew%): Anteil der 1-Methylvinylacetat/alkohol-Einheiten
K-Wert PVOH: K-Wert nach Fikentscher (viskosimetrische Bestimmung) des 1-Methylvinylalkohol/Vinylalkohol-Copolymeren bzw. Polyvinylalkohols
Viskosität PVOH: Viskosität des 1-Methylvinylalkohol/Vinylalkohol-Copolymeren bzw. des Polyvinylalkohols in 4 %-iger wässriger Lösung nach Höppler
Molekulargewicht PVOH: Molekulargewicht des mit Bistrimethylsilylacetamid silylierten 1-Methylvinylalkohol/Vinylalkohol-Copolymeren bzw. des Polyvinylalkohols, bestimmt mittels SEC (Size Exclusion Chromatography) gegen Polystyrolstandard, als Gewichtsmittel Mw, Zahlenmittel Mn und Uneinheitlichkeit U.
VOH-Gehalt: 1-Methylvinylalkohol/Vinylalkohol-Gehalt im Polyvinylacetal
Viskosität PVAC: Viskosität des Polyvinylacetals in 10 %-iger ethanolischer Lösung nach Höppler
Molekulargewicht PVAC: Molekulargewicht des Polyvinylacetals, bestimmt mittels SEC (Size Exclusion Chromatography) gegen Polystyrolstandard, als Gewichtsmittel Mw, Zahlenmittel Mn und Uneinheitlichkeit U.

Der Vergleich der Ergebnisse von Beispiel 1 mit dem Vergleichsbeispiel 3 zeigt, daß die Acetalisierung mit Butyraldehyd von 1-Methylvinylalkohol/Vinylalkohol-Copolymeren bzw. Polyvinylalkohol bei gleichem Molekulargewicht, gleichem K-Wert und gleicher Viskosität der Vinylalkohol-Polymerisate bei der erfindungsgemäßen Vorgehensweise Polyvinylbutyrale erhalten werden, welche sich bei gleichem Molekulargewicht durch deutlich reduzierte Lösungsviskosität auszeichnen.
Der Vergleich von Beispiel 3 mit Vergleichsbeispiel 4 sowie der Vergleich von Beispiel 4 mit Vergleichsbeispiel 5 zeigt, daß dies auch für die Acetalisierung mit Acetaldehyd und Propionaldehyd gilt.
In den Beispielen 7 bis 12 wurden unterschiedliche Mengen Butyraldehyd zur Acetalisierung eingesetzt. Die Ergebnisse zeigen, daß bei den beanspruchten Polyvinylacetalen deren Lösungsvikosität über einen weiten Bereich unabhängig vom Vinylalkohol-Gehalt ist.

**Patentansprüche**

1. Modifizierte Polyvinylacetale, erhältlich durch Verseifung von 1-Alkylvinylacetat-Vinylacetat-Copolymeren, welche 1-Alkylvinylacetat/Vinylacetat in einem Gewichtsverhältnis von 1/99 bis 40/60 enthalten, und anschließender Acetalisierung der mindestens 80 Gew% Vinylalkohol- und 1-Alkyl-Vinylalkohol-Einheiten aufweisenden Verseifungsprodukte mit einem oder mehreren aliphatischen Aldehyden mit 1 bis 6 C-Atomen unter Säurekatalyse in wäßrigem und/oder organischem Milieu.

2. Modifizierte Polyvinylacetale nach Anspruch 1, welche

    a) 50 - 89.5 Gew% Vinylacetal-Einheiten

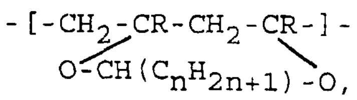

b) 10 - 30 Gew % Vinylalkohol-Einheiten -[-$CH_2$-CR(OH)-]-,
c) 0.5 - 20 Gew% Vinylacetat-Einheiten -[-$CH_2$-CR($OCOCH_3$)-]- enthalten,

wobei R die Bedeutung H oder $C_1$- bis $C_4$-Alkylrest hat und n gleich 0 bis 5 ist, und die Vinylalkohol-Einheiten b) und die Vinylacetat-Einheiten c) 1-Alkylvinylalkohol/Vinylalkohol und 1-Alkylvinylacetat/Vinylacetat in einem Gewichtsverhältnis von jeweils 1/99 bis 40/60 enthalten.

**3.** Modifizierte Polyvinylacetale nach Anspruch 1 oder 2, mit einer Viskosität (DIN 53015; Methode nach Höppler; 10 %-ige Lösung in Ethanol) von 6 bis 14 mPas.

**4.** Verfahren zur Herstellung von modifizierten Polyvinylacetalen durch Verseifung von 1-Alkylvinylacetat-Vinylacetat-Copolymeren, welche 1-Alkylvinylacetat/Vinylacetat in einem Gewichtsverhältnis von 1/99 bis 40/60 enthalten, und anschließender Acetalisierung der mindestens 80 Gew% Vinylalkohol- und 1-Alkylvinylalkohol-Einheiten aufweisenden teil- oder vollverseiften 1-Alkylvinylacetat-Vinylacetat-Copolymeren mit einem oder mehreren aliphatischen Aldehyden mit 1 bis 6 C-Atomen unter Säurekatalyse in wäßrigem und/oder organischem Milieu.

**5.** Verfahren nach Anspruch 4, wobei als teil- oder vollverseifte 1-Alkylvinylacetat-Vinylacetat-Copolymere solche eingesetzt werden, mit einer Viskosität (DIN 53015; Methode nach Höppler; 4 %-ige wäßrige Lösung) von 1 bis 30 mPas.

**6.** Verwendung der modifizierten Polyvinylacetale nach Anspruch 1 bis 3 in Druckfarbenzusammensetzungen.

**7.** Verwendung nach Anspruch 6, wobei die Druckfarbenzusammensetzung 5 bis 20 Gew% Pigmentanteil, 5 bis 15 % Polyvinylacetal-Bindemittel gemäß Anspruch 1 bis 3, und Lösungsmittel, sowie gegebenenfalls weitere Zusatzstoffe enthält.

**8.** Verwendung der modifizierten Polyvinylacetale nach Anspruch 1 bis 3 als Bindemittel in Korrosionsschutzmitteln.

**9.** Verwendung der modifizierten Polyvinylacetale nach Anspruch 1 bis 3 als Bindemittel in der Keramikindustrie, speziell als Binder für keramische Grünkörper

**10.** Verwendung der modifizierten Polyvinylacetale nach Anspruch 1 bis 3 als Bindemittel für Keramikpulver und Metallpulver im Spritzguß.

**11.** Verwendung der modifizierten Polyvinylacetale nach Anspruch 1 bis 3 als Bindemittel für die Innenbeschichtung von Dosen, gegebenenfalls in Kombination mit Vernetzern wie Epoxidharzen.

## Claims

**1.** Modified polyvinyl acetals obtainable by saponification of 1-alkylvinyl acetate-vinyl acetate copolymers which comprise 1-alkylvinyl acetate/vinyl acetate in a weight ratio of from 1/99 to 40/60 and subsequent acetalization of the saponification products comprising at least 80 % by weight of vinyl alcohol and 1-alkylvinyl alcohol units with one or more aliphatic aldehydes having from 1 to 6 carbon atoms in the presence of an acid catalyst in an aqueous and/or organic medium.

**2.** Modified polyvinyl acetals according to Claim 1 which comprise

a) 50-89.5 % by weight of vinyl acetal units

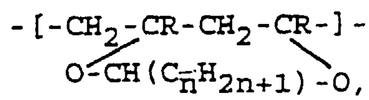

b) 10 - 30 % by weight of vinyl alcohol units $-[-CH_2-CR(OH)-]-$,
c) 0.5 - 20 % by weight of vinyl acetate units $-[-CH_2-CR(OCOCH_3)-]-$,

where R is H or a $C_1$-$C_4$-alkyl radical and n is from 0 to 5 and the vinyl alcohol units b) and the vinyl acetate units c) comprise 1-alkylvinyl alcohol/vinyl alcohol and 1-alkylvinyl acetate/vinyl acetate in a weight ratio of from 1/99 to 40/60 in each case.

**3.** Modified polyvinyl acetals according to Claim 1 or 2 having a viscosity (DIN 53015; Höppler method; 10 % strength solution in ethanol) of from 6 to 14 mPas.

**4.** Process for preparing modified polyvinyl acetals by saponification of 1-alkylvinyl acetate-vinyl acetate copolymers which comprise 1-alkylvinyl acetate/vinyl acetate in a weight ratio of from 1/99 to 40/60, and subsequent acetalization of the partially or fully saponified 1-alkylvinyl acetate-vinyl acetate copolymers comprising at least 80 % by weight of vinyl alcohol and 1-alkylvinyl alcohol units with one or more aliphatic aldehydes having from 1 to 6 carbon atoms in the presence of an acid catalyst in an aqueous and/or organic medium.

**5.** Process according to Claim 4, wherein the partially or fully saponified 1-alkylvinyl acetate-vinyl acetate copolymers used are ones having a viscosity (DIN 53015; Höppler method; 4 % strength aqueous solution) of from 1 to 30 mPas.

**6.** Use of the modified polyvinyl acetals according to any of Claims 1 to 3 in printing ink compositions.

**7.** Use according to Claim 6, wherein the printing ink composition comprises from 5 to 20 % by weight of pigment, from 5 to 15 % of of polyvinyl acetal binder according to any of Claims 1 to 3 and solvent, and also, if desired, further additives.

**8.** Use of the modified polyvinyl acetals according to any of Claims 1 to 3 as binders in anticorrosion compositions.

**9.** Use of the modified polyvinyl acetals according to any of Claims 1 to 3 as binders in the ceramics industry, specifically as a binder for ceramic green bodies.

**10.** Use of modified polyvinyl acetals according to any of Claims 1 to 3 as binders for ceramic powder and metal powder in injection mouldings.

**11.** Use of modified polyvinyl acetals according to any of Claims 1 to 3 as binders for the internal coating of cans, if desired in combination with crosslinkers such as epoxy resins.

## Revendications

**1.** Polyvinylacétals modifiés pouvant être obtenus par saponification de copolymères d'acétate de 1-alkylvinyl-acétate de vinyle, qui renferment de l'acétate de 1-alkylvinyl/acétate de vinyle en un rapport pondéral de 1/99 à 40/60, et acétalisation ultérieure des produits de saponification refermant au moins 80% en poids de motifs alcoolvinylique et alcool 1-alkylvinylique, avec un ou plusieurs aldéhyde(s) aliphatique(s) ayant de 1 à 6 atomes de carbone par catalyse acide en milieu aqueux et/ou organique.

**2.** Polyvinylacétals modifiés selon la revendication 1, qui renferment

a) de 50 à 89, 5% en poids de motifs vinylacétal

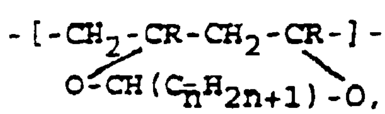

b) de 10 à 30% en poids de motifs alcoolvinyliques -[-$CH_2$-CR-(OH)-]-,
c) de 0,5 à 20% en poids de motifs acétate de vinyle -[-$CH_2$-CR($OCOCH_3$)-]-,

où R représente H ou un radical alkyle en $C_1$ à $C_4$ et n vaut de 0 à 5, et les motifs alcoolvinyliques b) et les motifs acétate de vinyle c) renferment de l'alcool 1-alkylvinylique/alcool vinylique et de l'acétate de 1-alkylvinyle/acétate de vinyle en un rapport pondéral de 1/99 à 40/60 dans chaque cas.

**3.** Polyvinylacétals modifiés selon la revendication 1 ou 2, ayant une viscosité (DIN 53015 ; méthode de Höppler ; solution à 10% dans de l'éthanol) de 6 à 14 mPas.

**4.** Procédé de préparation de polyvinylacétals modifiés par saponification de copolymères d'acétate de 1-alkylvinyl-acétate de vinyle, qui renferment de l'acétate de 1-alkylvinyle/acétate de vinyle en un rapport pondéral de 1/99 à 40/60, et acétalisation ultérieure des copolymères d'acétate de 1-alkylvinyle-acétate de vinyle partiellement ou totalement saponifiés, renfermant au moins 80% en poids de motifs alcool vinylique et alcool 1-alkylvinylique, avec un ou plusieurs aldéhydes aliphatiques ayant de 1 à 6 atomes de carbone, par catalyse acide en milieu aqueux et/ou organique.

**5.** Procédé selon la revendication 4, dans lequel on utilise, en tant que copolymères d'acétate de 1-alkylvinyl-acétate de vinyle partiellement ou totalement saponifiés, ceux ayant une viscosité (DIN 53015 ; méthode de Höppler ; solution aqueuse à 4%) de 1 à 30 mPas.

**6.** Utilisation des polyvinylacétals modifiés selon les revendications 1 à 3 dans des compositions colorantes d'impression.

**7.** Utilisation selon la revendication 6, dans laquelle la composition colorante d'impression comprend une proportion de pigment de 5 à 20%, de 5 à 15% de liant polyvinylacétal selon les revendications 1 à 3 et du solvant, et éventuellement d'autres additifs.

**8.** Utilisation des polyvinylacétals modifiés selon les revendications 1 à 3 en tant que liants dans des compositions anticorrosion.

**9.** Utilisation des polyvinylacétals modifiés selon les revendications 1 à 3, en tant que liants dans l'industrie des céramiques, en particulier en tant que liants pour des corps verts céramiques.

**10.** Utilisation des polyvinylacétals modifiés selon les revendications 1 à 3, en tant que liants pour des poudres céramiques et des poudres métalliques en moulage par injection.

**11.** Utilisation des polyvinylacétals modifiés selon les revendications 1 à 3, en tant que liants pour le revêtement intérieur de boîtes métalliques, éventuellement en combinaison avec des agents de réticulation tels que les résines époxy.